# EUROPEAN PATENT APPLICATION

(11) **EP 2 226 533 A1**
(43) Date of publication of application: **08.09.2010**
(21) Application number: 10155846.8
(22) Date of filing: 08.03.2010
(51) Int. Cl.: F16J 15/02

(54) **Sealing washer with multiple sealing rings**

(30) Priority: 06.03.2009 US 399427
(71) Applicant: Hutchinson FTS, Inc., Troy MI 48083 (US)
(72) Inventor: Patel, Chhotu, Phoenix Arizona 85045 (US); Christie, Dean, Royal Oak Michigan 48067 (US)
(74) Representative: Harrison Goddard Foote

(57) **Abstract**

A sealing washer, comprising a rigid body having opposite, disc-shaped surfaces defining parallel planes, and a central opening defined through the rigid body along a central axis thereof; and multiple, concentric, polymeric sealing rings projecting away from the plane defined by each of the disc-shaped surfaces of the rigid body, the sealing rings being generally coaxial with the central axis, and each sealing ring being deformable in response to compression forces applied to the plane defined by each disc-shaped surface.

## Description

### FIELD OF THE INVENTION

The present invention generally relates to sealing washers, such as for use, for example, in block connectors found in vehicle air-conditioning systems and the like, and more particularly to such sealing washers characterized by multiple, concentric sealing rings.

### BACKGROUND

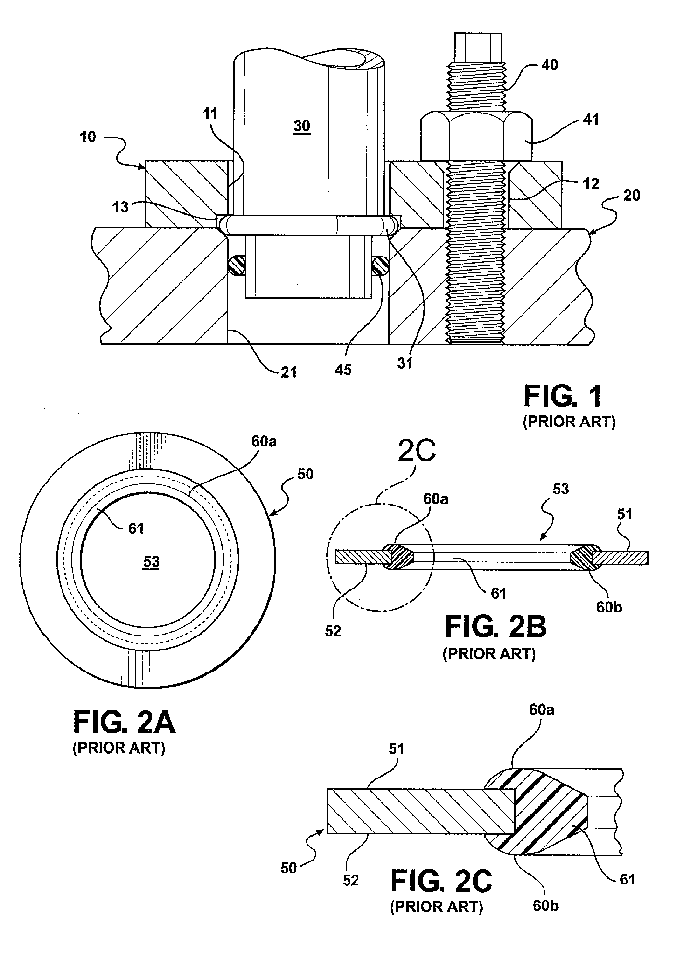

Block connectors are commonly employed in vehicle air-conditioning and other fluid-transfer systems where they serve to connect discrete sections of a common fluid line. As exemplified in **FIG. 1****,** such block connectors are generally characterized by mateable male **10** and female **20** connectors that capture therebetween one end of a fluid line in sealed relation with an adjoining section of the fluid line. More particularly, the male connector **10** includes a conduit passage **11** dimensioned to receive the end of a conduit **30** therethrough, and a fastener passage **12** laterally offset from the conduit passage **11.** Conduit passage **11** includes a counter-bored opening **13** of larger diameter which is dimensioned to receive therein the larger-diameter circumferential flange **31** defined on the conduit **30.** The female connector **20** includes a conduit port 21 dimensioned to receive a terminal, pilot portion of the conduit **30** therein, and a fastener stud **40,** such as the threaded bolt shaft or stud depicted, mounted in laterally offset relation to the conduit port **21.** Conduit port **21** will typically have secured thereto, and in fluid communication therewith, a section of fluid line (not shown) which extends from the female connector **20** to another location along the fluid line.

In use, conduit **30** is inserted into the conduit passage **11** of male connector **10** so that flange **31** is received in opening **13,** whereupon the pilot end of the conduit **30** is inserted into conduit port **21** while, simultaneously, the male connector is positioned so that the fastener stud **40** is received through fastener passage **12.** A fastener **41,** such as the illustrated nut, is thereafter tightened on the fastener stud **40** to fix the male **10** and female **20** connectors together so that the conduit **30** is trapped between them in secure interconnection with the conduit port **21.**

Sealing the interconnection between conduit **20** and conduit port **12** in the thus-assembled block connector is conventionally accomplished by any of a variety of means, including the employment of one or more O-rings **45** positioned about the circumference of the conduit pilot-end so as to be compressed upon insertion of the pilot end into the conduit port **12.**

Still another conventionally employed sealing means has been sealing washers, such as shown in **FIGS. 2A** through **2C****.** As shown, such sealing washers generally comprise a metal body **50** with opposite, disc-shaped surfaces **51, 52** defining parallel planes, and a central opening **53** defined through the body along a central axis. A single polymeric sealing ring **60a** or **60b** projects away from each of the disc-shaped surfaces **51, 52.** Furthermore, an annular polymeric lip **61** extends from the washer body **50** into the central opening **53,** the lip **61** constituting an extension of, and formed integrally with, the sealing rings **60a, 60b,** as best shown in **FIG. 2C****.** With reference being had to the exemplary block connector of **FIG. 1****,** in use, the pilot end of the conduit **30** is inserted through the central opening **53** so that the washer, substituted for the O-ring of **FIG. 1****,** is compressed between the conduit flange **31** and the mating surface of the female connector block **20** in the assembled connector block. Under such axial compression, the sealing rings **60a, 60b** are compressed against the opposed surfaces of the conduit flange **31** and the mating surface of the female connector block **20** to form a fluid seal. Further, such compression urges the lip **61** into sealing contact with the exterior surface of the fluid conduit **30.**

Irrespective of whether O-rings or sealing washers are employed as the sealing means, it remains the case that connector blocks, while advantageous for their facile employment and robust construction, continue to be plagued by the eventual intrusion of foreign material between the male and female connectors and, ultimately, into the area occupied by the sealing means. Relative to the sealing means, the intrusion of such foreign materials can compromise the seal or even break down the material of the sealing means leading, in either case, to leaks.

In light of the foregoing, there exists a need for some means for precluding, or at least substantially reducing, the intrusion of foreign materials into the area of block-style connectors occupied by the sealing means.

### SUMMARY OF THE INVENTION

According to the present invention, there is provided a sealing washer comprising a rigid body having opposite, disc-shaped surfaces defining parallel planes, and a central opening defined through the rigid body along a central axis thereof; and multiple, concentric, polymeric sealing rings projecting away from the plane defined by each of the disc-shaped surfaces of the rigid body, the sealing rings being generally coaxial with the central axis, and each sealing ring being deformable in response to compression forces applied to the plane defined by each disc-shaped surface.

Per one feature of the invention, the multiple polymeric sealing rings projecting away from the plane defined by each of the disc-shaped surfaces of the rigid body each project to the same height as measured from the apex of each such sealing ring to the plane defined by the disc-shaped surface from which they project. In another embodiment, one or more of the multiple polymeric sealing rings projecting away from the plane defined by each of the disc-shaped surfaces of the rigid body may project to a different height than the other polymeric sealing rings. For instance, each of the multiple, concentric polymeric sealing rings projecting away from the plane defined by each of the disc-shaped surfaces of the rigid body may project to a different height, with the height of each successive concentric sealing ring increasing as measured in the direction from the central opening moving radially outwardly. Alternatively, where at least three such concentric polymeric sealing rings project away from the plane defined by each of the disc-shaped surfaces of the rigid body, the two innermost of the at least three concentric polymeric sealing rings may project to the same height, while the height of each successive concentric sealing ring, as measured in the direction from the central opening moving radially outwardly, projects to a greater height than the two innermost sealing rings.

According to one feature hereof, the rigid body may be made of metal, including by way of non-limiting example, aluminum, steel, etc.

Per one embodiment of the invention, two polymeric sealing rings project away from the plane defined by each of the disc-shaped surfaces of the rigid body. In another embodiment, three or even more such polymeric sealing rings are provided on each of the disc-shaped surfaces of the rigid body.

According to another feature of the invention, the rigid body is at least partially covered with a polymeric coating. Further to this feature, the sealing rings are formed integrally with the polymeric coating. The rigid body may, alternatively, be completely covered with the polymeric coating.

Per still another feature, the sealing washer further comprises an annular polymeric lip comprising extending from the rigid body into the central opening. Where the rigid body is at least partially covered with a polymeric coating, both the sealing rings and the annular polymeric lip are all integrally formed with the polymeric coating.

While not limited to such application, the inventive sealing washer may be employed in connection with block connectors of the type comprising a male connector having a conduit passage and at least one fastener passage laterally offset from the conduit passage, a female connector having a conduit port and at least one fastener stud laterally offset from the conduit port and receivable within the at least one fastener passage, a conduit disposed in the conduit passage and receivable within the conduit port. According to such application, the sealing washer is disposed about an exterior surface of the conduit and compressed between the male and female connectors to form a fluid-tight seal.

### BRIEF DESCRIPTION OF THE DRAWINGS

For a better understanding of the present invention and to show more clearly how it may be carried into effect, reference will now be made, by way of example, to the accompanying drawings, which show an exemplary embodiment of the present invention, and in which:
**FIG. 1** is a partial cross section of a connector block according to the prior art;
**FIG. 2A** is a top-down view of a sealing washer according to the prior art;
**FIG. 2B** is a lateral cross-sectional view of the sealing washer of **FIG. 2A****;**
**FIG. 2C** is a detailed section of **FIG. 2B****;**
**FIG. 3A** is a top-down view of a sealing washer according to the present invention;
**FIG. 3B** is a lateral cross-sectional view of the sealing washer of **FIG. 3A****;**
**FIG. 3C** is a detailed section of **FIG. 3B****;**
**FIG. 4** is a detailed lateral cross-sectional view of a sealing washer according to an alternative embodiment of the present invention;
**FIG. 5A** is a top-down view of a sealing washer according to another alternative embodiment of the present invention;
**FIG. 5B** is a detailed lateral cross-sectional view of a sealing washer according to the embodiment of **FIG. 5A****;**
**FIG. 6** is a detailed lateral cross-sectional view of a sealing washer according to a still further alternative embodiment of the present invention;
**FIGS. 7** and **8** are exploded, quartering perspectives of a block connector in which the sealing washer of the present invention may be incorporated; and
**FIG. 9** is detailed, lateral cross-sectional view of a portion of the block connector of **FIGS. 7** and **8****.**

### WRITTEN DESCRIPTION

As required, detailed embodiments of the present invention are disclosed herein. However, it is to be understood that the disclosed embodiments are merely exemplary of the invention that may be embodied in various and alternative forms. The accompanying drawings are not necessarily to scale, and some features may be exaggerated or minimized to show details of particular components. Therefore, specific structural and functional details disclosed herein are not to be interpreted as limiting, but merely as a representative basis for teaching one skilled in the art to variously employ the present invention.

Referring now to the drawings, wherein like numerals refer to like or corresponding parts throughput the several views, the present invention is generally characterized as a sealing washer, such as for use, for example, in block connectors found in vehicle air-conditioning systems and the like. However, it will be appreciated from the following disclosure that the invention is suitable for employment in other operational environments where a fluid seal is required and it is desirable to avoid compromise of the seal by the intrusion of foreign materials into the space occupied thereby.

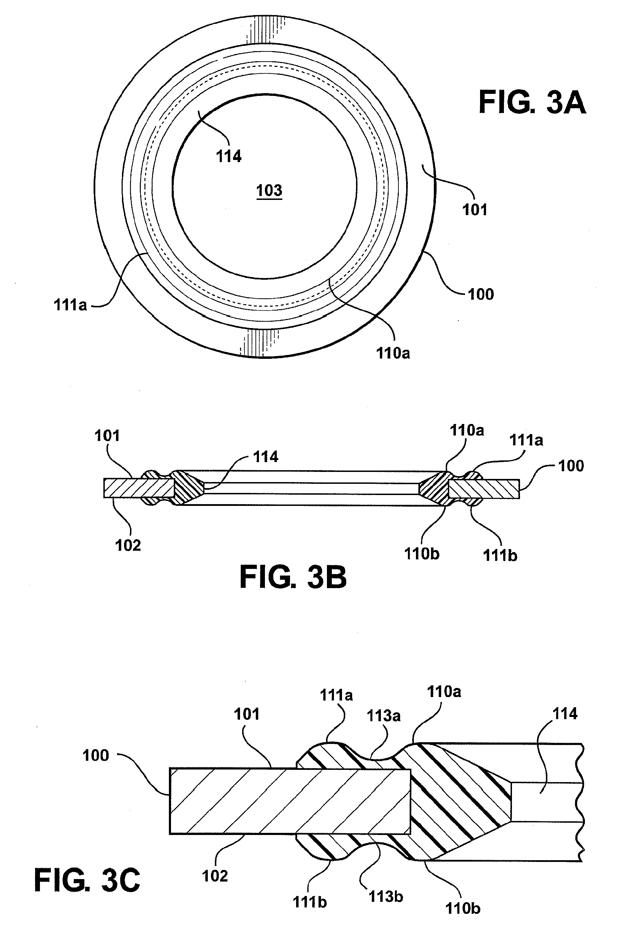

Referring now in detail to the drawings, and particularly to **FIGS. 3A** through **3C****,** the sealing washer of the present invention will be seen to most generally comprise a rigid body **100** having opposite, disc-shaped surfaces **101, 102** defining parallel planes, and a central opening **103** defined through the rigid body **100** along a central axis **104** thereof; and multiple, concentric, polymeric sealing rings **110a, 111a, 110b, 111b** projecting away from the planes defined by the disc-shaped surfaces **101, 102** of the rigid body **100.** Sealing rings **110a, 111a, 110b, 111b** are, as depicted, generally coaxial with the central axis **104.** Furthermore, it may be seen that, according to the illustrated embodiment, the sealing rings **110a, 111a** projecting from the surface **101** are axially aligned with the sealing rings **110b, 111b** projecting from the surface **102.** It is contemplated, however, that these sealing rings **110a, 111a, 110b, 111b** may be axially misaligned.

Each sealing ring **110a, 111a, 110b, 111b** is preferably deformable in response to compression forces applied to the plane defined by each disc-shaped surface **101, 102,** so as to increase the area of surface contact with the immediately adjacent surfaces with which they are in contact, all as described below in respect of an exemplary operational environment of the invention. But while it is important for sealing rings **110a, 110b** to provide a fluid-tight seal, sealing rings **111a, 111b** and, as provided, any additional, concentric sealing rings need not necessarily form a fluid-tight seal so long as the sealing rings **111a, 111b** and any additional sealing rings act to seal against the intrusion of foreign materials which can compromise the fluid-tight seal formed by at least the sealing rings **110a, 110b.** Of course, it is contemplated that one or more of the sealing rings (e.g., **111a, 111b,** etc.) provided in addition to the sealing rings **110a, 110b** may be dimensioned to form a fluid-tight seal as well.

Washer body **100** is, in the illustrated embodiment, characterized by a thickness (measured as the distance between the opposite surfaces **101, 102**) of approximately 0.90 mm, an outside diameter of approximately 20.75 mm, and a diameter of approximately 14.00 mm for the central opening **103.** These dimensions are selected for their suitability in a particular, and exemplary, block connector environment for an automotive fluid transfer system. They are not intended to be limiting of the invention and, accordingly, other dimensions may be selected according to the particular environment in which the sealing washer is to be employed.

According to the illustrated embodiment, the washer body **100** is fabricated from metal, and more particularly from an aluminum alloy such as, by way of example only, 6082-T6 or 5252-H22. Of course, other materials known in the art to be suited to employment in sealing washers and/or which are acceptable substitutes for the above-specified materials, may be selected in the alternative.

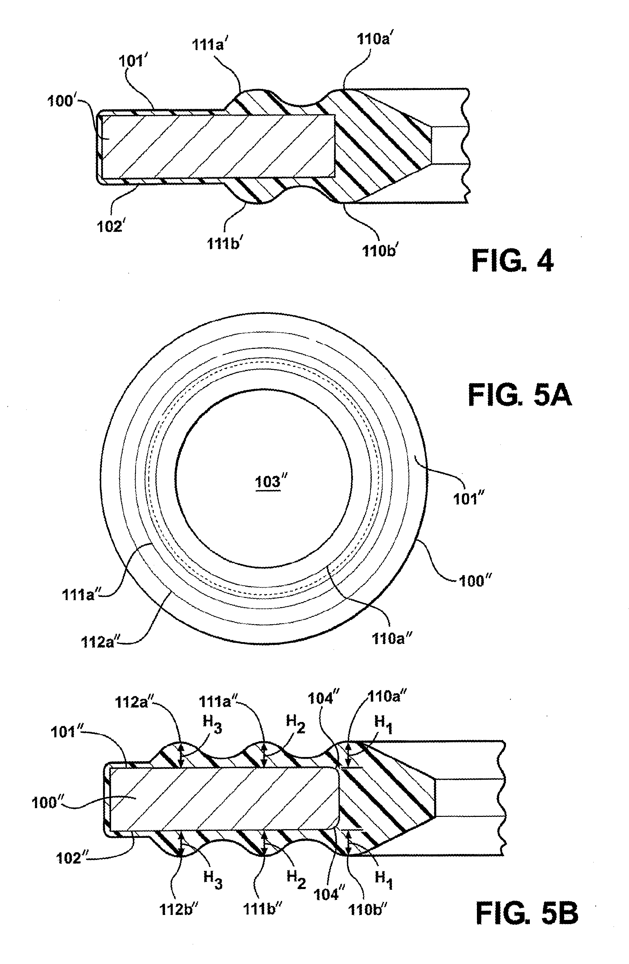

As best shown in **FIGS. 3B** and **3C****,** sealing rings **110a, 111a, 110b, 111b** are, in the illustrated embodiment, formed integrally with a polymeric coating formed over at least a portion of the washer body **100.** The formation of this coating, and the associated formation of the sealing rings **110a, 111a, 110b, 111b** in connection therewith, may be accomplished according to conventional techniques. Optionally, the body **100'** may be completely covered with the polymeric coating, as shown in **FIG. 4****.**

With continuing reference to **FIGS. 3B** and **3C****,** sealing rings **110a, 110b** are each radiused in cross-section at the apex and, moving radially outwardly from the central opening **103,** each slopes downwardly from its apex into a trough or annular groove **113a, 113b**. Further defining the annular groove oppositely of the sealing rings **110a, 110b** are the sealing rings **111a, 111b.** In the illustrated embodiment, sealing rings **111a, 111b** are characterized as annular projections of similar cross-sectional dimensions to sealing rings **110a, 110b.** As noted, however, this correspondence is not absolutely necessary.

In the exemplary form of the sealing washer depicted, each of the pairs of sealing rings **110a, 111a** and **110b, 111b** are, between their respective apexes, spaced apart by a distance of approximately 3.4 mm. As with other dimensions indicated herein, the foregoing dimensions are selected for their suitability in a particular, and exemplary block connector environment for an automotive fluid transfer system. They are not intended to be limiting of the invention and, accordingly, other dimensions may be selected according to the particular environment in which the sealing washer is to be employed.

Continuing radially outwardly from the apex of sealing rings **111a, 111b,** the polymeric coating terminates approximately where the slope of sealing rings **111a, 111b** intersect a surface **101** or **102,** respectively, of the washer body **100.** As noted above, it is contemplated that the polymer coating may continue further toward the outer diameter of the washer body **100,** and may even be continuous over the entire surface thereof, such as shown in the alternative embodiment of **FIG. 4****.**

According to the illustrated embodiments, the polymer coating is rubber, and more particularly hydrogenated nitrile butadiene rubber ("HNBR"). HNBR is known to those skilled in the art to be well-suited to sealing applications. However, other materials, also known to those skilled in the art, may be substituted for H N BR.

Per convention, the sealing washer of the illustrated embodiment may further be provided with an annular polymeric lip **114** extending from body **100** and partially into the central opening **103.** As shown, lip **114** is formed integrally with the polymer coating and is, more particularly, defined as a continuation of the sealing rings **110a, 110b.** Still more particularly, it may be seen in **FIG. 3C** that the sealing rings **110a, 110b** taper in cross-section gradually from their respective apexes on either of the surfaces **101, 102** of the body **100** into the central opening **103** to define the lip **114.** This lip **114** in the illustrated embodiment extends approximately 1.35 mm into the opening **103,** while the apex of each of the sealing rings **110a, 111a, 110b, 111b, 111b** is defined approximately 0.35 mm above the respective surface **101, 102** from which the sealing ring projects. As with other dimensions indicated herein, the foregoing dimensions are selected for their suitability in a particular and exemplary block connector environment for an automotive fluid transfer system, and so are not intended to be limiting of the invention; other dimensions may be selected according to the particular environment in which the sealing washer is to be employed.

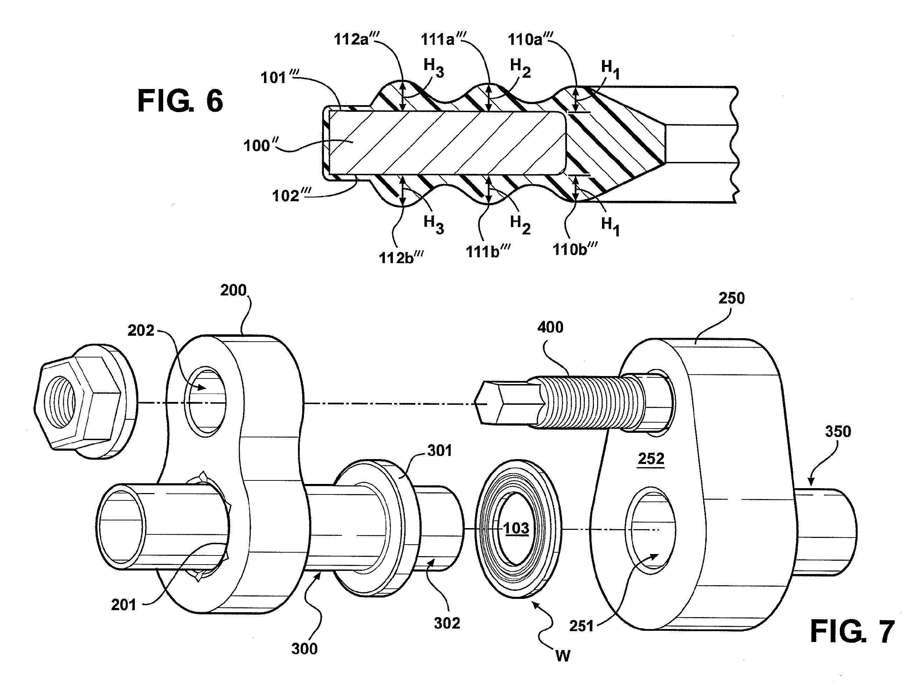

Referring next to **FIGS. 5A** and **5B****,** there is shown an alternative embodiment of the invention which is like the embodiment of **FIGS. 3A** through **3C** in all respects except as noted. More particularly, the embodiment of **FIGS. 5A** and **5B** is distinguished in that the body **100"** has a continuous polymeric coating such as shown in the embodiment of FIG. 4 (although this is optional) and there are provided three concentric, polymeric sealing rings **110a", 111a", 112a"** and **110b", 111b", 112b"** projecting from, respectively, each of the surfaces **101"** and **102"** of the body **100".** Further according to this embodiment, it will be seen that the spaced-apart edges **104"** of the body **100"** proximate the central opening **103"** are radiused to eliminate the sharp corners shown in the embodiments of **FIGS. 3A** through **3C** and **4.** As with the embodiments described hereinabove, the height **H₁, H₂** and **H₃** of sealing rings **110a", 111a", 112a"** and **110b", 111b", 112b"**, as measured from the apexes of each to the respective surfaces **101"** and **102"** from which they project, is the same. Moreover, according to the illustrated embodiment, these heights **H₁, H₂** and **H₃** for each of the sealing rings **110a", 111a", 112a"** projecting from the surface **101"** are the same as the heights **H₁, H₂** and **H₃** for the corresponding sealing rings **110b", 111b", 112b"** projecting from the surface **102".** However, this does not necessarily have to be the case. Turning then to **FIG. 6**, there is shown a still further embodiment of the invention which in all material respects is like the sealing washer of **FIGS. 5A** and **5B** except in that the height **H₁, H₂** and **H₃** of each sealing ring **110a"', 111a"', 112a"'** and **110b"', 111b"', 112b"',** measured from the apexes of each to the respective surfaces **101"'** and **102'"** from which they project, is, beginning with the innermost sealing rings **(110a"', 110b"')** and moving outwardly from the central opening 103"', successively higher; thus, height **H₁**of each sealing ring **110a"', 110b"'** is less than height **H₂** of each of sealing rings **111a"', 111b"',** while height **H₂** of each of sealing rings **111a"', 111b"'** is less than height **H₃** of each of sealing rings **112a"', 112b"'.** By this configuration, noise vibration and harshness may be further reduced, while balance may be improved. It is further contemplated that the sealing washer of the foregoing embodiment may be configured so that the heights **H₁** and **H₂** of each sealing ring **110a"', 111a"'** and **110b"', 111b"'** are the same, while the height **H₃** for each of sealing rings **112a"', 112b"'** (as well as any successive concentric sealing rings **Hₙ, Hₙ₊₁,** etc.) is higher; thus, height **H₁**of each sealing ring **110a"', 110b'"** is the same as height **H₂** of each of sealing rings **111a"', 111b"',** while height **H₃** for each of sealing rings **112a"', 112b"'** is greater than the heights **H₁, H₂** of sealing rings **110a"', 110b"', 111a"', 111b"'** (and, where further sealing rings are provided, their respective heights **Hₙ, Hₙ₊₁,** etc. are successively higher). According to the foregoing embodiment, and as with the previously described embodiments, the various heights **H₁, H₂** and **H₃** (and, where further sealing rings are provided, heights **Hₙ, Hₙ₊₁**) for corresponding pairs of the sealing rings **110a"'** and **110b"', 111a"'** and **111b"', 112a"'** and **112b"'** (etc.) projecting from opposite surfaces **101"'** and **102"'** are the same, although this does not necessarily have to be the case.

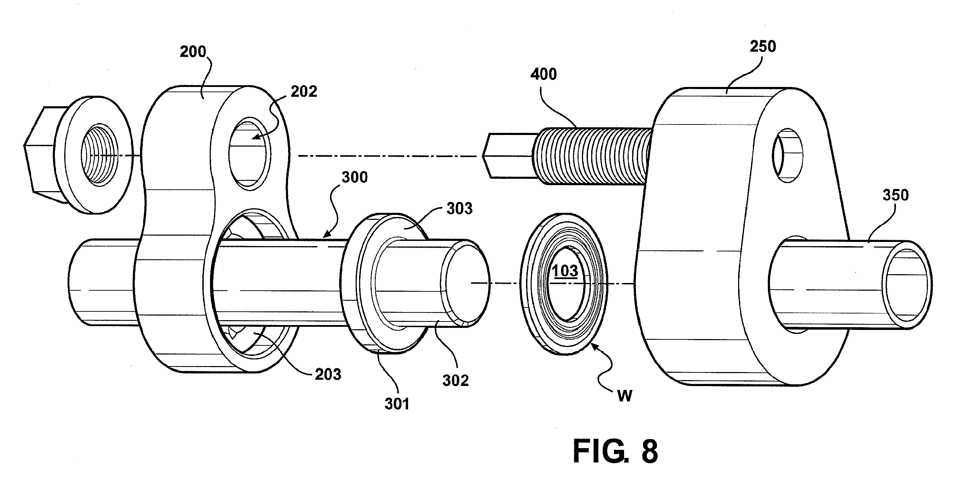

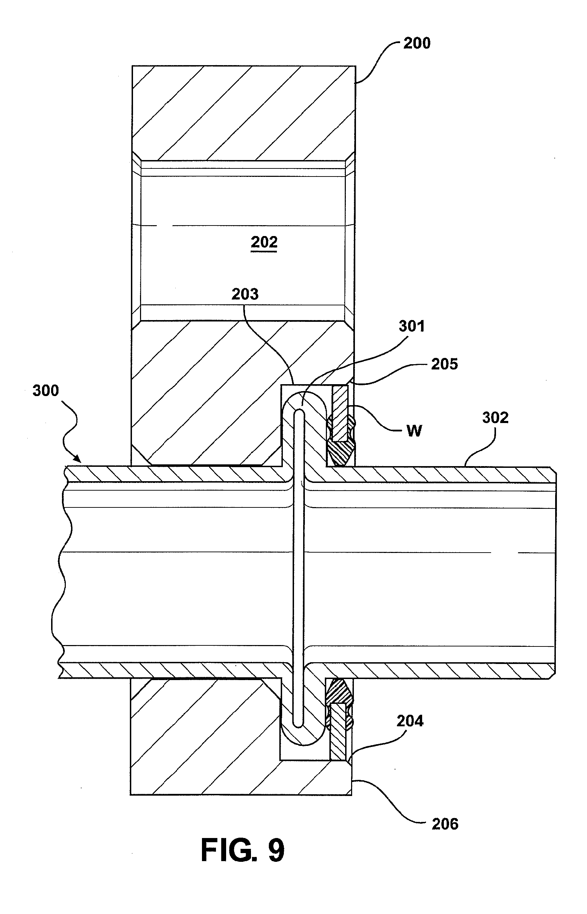

Turning now to **FIGS. 7** through **9****,** there is shown an exemplary block connector incorporating the sealing washer of the present invention. The block connector is generally characterized by mateable male **200** and female **250** connectors that capture therebetween one end of a fluid line in sealed relation with an adjoining section of the fluid line. The male connector **200** includes a conduit passage **201** dimensioned to receive the end of a conduit **300** therethrough, and a fastener passage **202** laterally offset from the conduit passage **201.** Counter-bored opening **203** of larger diameter is dimensioned to receive the larger-diameter circumferential flange **301** defined on the conduit **300** so to the conduit is captured between the male **200** and female **250** connectors upon mated assembly thereof. The female connector **250** includes a conduit port **251** dimensioned to receive the terminal, pilot portion **302** of the conduit **300** therein, and a fastener stud **400,** such as the threaded bolt shaft or stud depicted, mounted in laterally offset relation to the conduit port **251.** Conduit port **251** further has secured thereto a section of fluid line, such as the illustrated conduit **350,** extending from the female connector **250,** as shown.

Either before of after conduit **300** is inserted into the conduit passage **201** of male connector **200** so that flange **301** is received in opening **203,** pilot end **302** of the conduit **300** is inserted through the central opening **103** of the sealing washer (indicated generally at **W)** of the present invention until the sealing rings **110a, 111a** are brought into contact with the opposing surface **303** of conduit flange **301.** Here it is notable that, per the illustrated embodiment, the depth of the opening **203** is such that the plane defined by surface **102** of the sealing washer is approximately flush with the inner edge **204** of the chamfered surface **205** defining the mouth of opening **203,** thereby exposing the sealing rings **110b, 111b** above the mating surface **206** of the male connector **200** to a degree which permits sealing contact with the mating surface **252** of the female connector block **250** but does not expose the sealing rings to over-compression in the assembled block connector.

Thereafter, the pilot end of the conduit **300** is inserted into conduit port **251** while, simultaneously, the male connector **200** is positioned so that the fastener stud **400** is received through fastener passage **202.** A fastener **401,** such as the illustrated nut, is then tightened on the fastener stud **400** to fix the male **200** and female **250** connectors so that the washer **W** is compressed between the opposing surface **302** conduit flange **301** and the mating surface **252** of the female connector block **250** in the assembled block connector. Under such axial compression, the sealing rings **110a, 111a, 110b, 111b,** are compressed against these surfaces **302, 252** to form a seal (in the case of at least the sealing rings **110a, 110b,** a fluid-tight seal). Further, such compression urges the lip **114** into sealing contact with the exterior surface **303** of the fluid conduit **300.**

From the foregoing description, it will be appreciated that the disadvantages attending prior art sealing means are addressed, including in block connectors.

The foregoing description of the exemplary embodiments of the invention have been presented for purposes of illustration and description. They are not intended to be exhaustive of, or to limit, the invention to the precise forms disclosed, and modifications and variations are possible in light of the above teachings or may be acquired from practice of the innovation. The embodiments shown and described in order to explain the principals of the innovation and its practical application to enable one skilled in the art to utilize the innovation in various embodiments and with various modifications as are suited to the particular use contemplated. Accordingly, all such modifications and embodiments are intended to be included within the scope of the present invention. Other substitutions, modifications, changes and omissions may be made in the design, operating conditions and arrangement of the exemplary embodiments without departing from the spirit of the present innovations.

## Claims

1. A sealing washer, comprising:
a rigid body having opposite, disc-shaped surfaces defining parallel planes, and a central opening defined through the rigid body along a central axis thereof; and
multiple, concentric, polymeric sealing rings projecting away from the plane defined by each of the disc-shaped surfaces of the rigid body, the sealing rings being generally coaxial with the central axis, and each sealing ring being deformable in response to compression forces applied to the plane defined by each disc-shaped surface.

2. The sealing washer of claim 1, wherein the rigid body is made of metal.

3. The sealing washer of claim 1 or 2, wherein two such polymeric sealing rings project away from the plane defined by each of the disc-shaped surfaces of the rigid body.

4. The sealing washer of claim 1 or 2, wherein three such polymeric sealing rings project away from the plane defined by each of the disc-shaped surfaces of the rigid body.

5. The sealing washer of any preceding claim, wherein the rigid body is at least partially covered with a polymeric coating, and wherein the sealing rings are formed integrally with the polymeric coating.

6. The sealing washer of claim 5, wherein the rigid body is completely covered with the polymeric coating.

7. The sealing washer of any preceding claim, further comprising an annular polymeric lip extending from the rigid body into the central opening.

8. The sealing washer of claim 7, wherein one or both of the sealing rings and the annular polymeric lip are integrally formed with the polymeric coating.

9. The sealing washer of any preceding claim, wherein the multiple concentric polymeric sealing rings projecting away from the plane defined by each of the disc-shaped surfaces of the rigid body each project to the same height as measured from the apex of each such sealing ring to the plane defined by the disc-shaped surface from which they project.

10. The sealing washer of any of claims 1 to 8, wherein one or more of the multiple concentric polymeric sealing rings projecting away from the plane defined by each of the disc-shaped surfaces of the rigid body projects to a different height than the other polymeric sealing rings as measured from the apex of each such sealing ring to the plane defined by the disc-shaped surface from which they project.

11. The sealing washer of any of claims 1 to 8, wherein each of the multiple, concentric polymeric sealing rings projecting away from the plane defined by each of the disc-shaped surfaces of the rigid body projects to a different height, with the height of each successive sealing ring increasing as measured in the direction from the central opening moving radially outwardly.

12. The sealing washer of any of claims 1 to 8, where at least three such concentric polymeric sealing rings project away from the plane defined by each of the disc-shaped surfaces of the rigid body, and wherein further the two innermost of the at least three concentric polymeric sealing rings projecting away from the plane defined by each of the disc-shaped surfaces of the rigid body project to the same height, while the height of each successive concentric sealing ring, as measured in the direction from the central opening moving radially outwardly, projects to a greater height than the two innermost sealing rings.

13. A block connector comprising:
a male connector having a conduit passage and at least one fastener passage laterally offset from the conduit passage;
a female connector having a conduit port and at least one fastener stud laterally offset from the conduit port and receivable within the at least one fastener passage;
a conduit disposed in the conduit passage and receivable within the conduit port; and
a seal disposed about an exterior surface of the conduit and compressed between the male and female connectors to form a fluid-tight seal,
wherein the seal comprises a sealing washer as claimed in any preceding claim.
